# EUROPÄISCHE PATENTSCHRIFT

(11) **EP 1 279 805 B1**
(45) Veröffentlichungstag und Bekanntmachung des Hinweises auf die Patenterteilung: **04.06.2008**
(21) Anmeldenummer: 02012975.5
(22) Anmeldetag: 12.06.2002
(51) Int. Cl.: F02B 29/04

(54) **Luftgekühlter Ladeluftkühler**
Air-cooled intake air cooler
Refroidisseur de l'air de charge aéroréfrigérée

(30) Priorität: 27.07.2001 DE 10136861
(43) Veröffentlichungstag der Anmeldung: 29.01.2003
(73) Patentinhaber: Modine Manufacturing Company, Racine/Wisconsin 54403-2552 (US)
(72) Erfinder: Knecht, Wolfgang, Dipl.-Ing., 70599 Stuttgart (DE); Vetter, Frank, Dr., 73765 Neuhausen (DE); Soldner, Jörg, Dr., 71139 Ehringen (DE); Meshenky, Steven P., Racine, Wisconsin 53185 (US); Barfknecht, Robert J., Waterford, Wisconsin 53185 (US)
(74) Vertreter: Wolter, Klaus-Dietrich

(56) Entgegenhaltungen:
- DE-A- 10 045 987
- DE-A- 19 962 391
- US-A- 4 436 145
- US-A- 5 794 689
- PATENT ABSTRACTS OF JAPAN Bd. 2000, Nr. 09, 13. Oktober 2000 (2000-10-13) & JP 2000 161894 A (SANDEN CORP), 16. Juni 2000 (2000-06-16)

## Beschreibung

Die Erfindung betrifft einen luftgekühlten Ladeluftkühler für Kraftfahrzeuge, bestehend aus zwei gegenüberliegenden, einen großen und eine kleinen Querschnitt aufweisenden Sammelkästen, die mittels einer oder mehrerer Reihen von Flachrohren, die Inneneinsätze aufweisen, verbunden sind, wobei zwischen den Flachrohren Wärmeaustauschelemente angeordnet sind, durch die die Kühlluft hindurchströmt und die gemeinsam mit den Flachrohren das Kühlnetz bilden und wobei in mindestens einem der Sammelkästen ein zweiter Wärmeaustauscher angeordnet ist, dessen Rohre von der Ladeluft umströmt und von Kühlflüssigkeit durchströmt sind.

Seit langer Zeit sind vorstehende Merkmale als grundsätzlich für Wärmeaustauscher und auch für luftgekühlte Ladeluftkühler anzusehen. Der Ladeluftkühler entspricht beispielsweise demjenigen aus dem Dokument DE 32 00 688 A1, das bereits 1982 angemeldet wurde. Der zweite Wärmeaustauscher besteht dort aus einer im Eintritts - Sammelkasten angeordneten Zuflussleitung und einer im Austritts - Sammelkasten angeordneten Abflussleitung für eine Kühlflüssigkeit. Von der Zuflussleitung und der Abflussleitung zweigen in regelmäßigen Abständen Kanäle oder flache Rohre ab, die über ihre ganze Länge und Breite im wärmeaustauschenden Kontakt mit der einen Flachseite der Flachrohre für die Ladeluft angeordnet sind. In Abhängigkeit vom Belastungszustand der Brennkraftmaschine erfolgt die Kühlung der Ladeluft somit je nach Bedarf mittels Kühlluft und mittels der Kühlflüssigkeit der Brennkraftmaschine. Die Vorteile sind insbesondere im geringeren Platzbedarf für die gesamte Kühlanlage des Fahrzeuges zu sehen, sowie in einer durch entsprechende Steuerung und Regelung verbesserten Anpassung an verschiedene, bereits erwähnte, Belastungszustände der Brennkraftmaschine. Allerdings ist der in der DE'688 gezeigte Ladeluftkühler wesentlich aufwendiger herzustellen, weshalb er sich bisher nicht in der Praxis durchsetzen konnte. Zwischen den flachen Rohren für die Kühlflüssigkeit und den flachen Rohren für die Ladeluft, die unmittelbar aneinanderliegen, ist der Wärmeübergang nicht so effizient, wie man sich das wünschen würde. Darin könnte ein weiterer Grund dafür bestehen, dass solche Ladeluftkühler in der Praxis kaum anzutreffen sind.
Seit ebenfalls langer Zeit - und bis in die Gegenwart hinein - schlägt man vor, in einem Sammelkasten eines Wärmetauschers einen zweiten Wärmetauscher anzuordnen, um damit ein anderes Betriebsmittel zu temperieren. Solche Vorschläge wurden und werden in der Praxis realisiert. Oftmals handelt es sich bei dem zweiten Wärmetauscher um wassergekühlte Ölkühler, die im Wasserkasten eines Wasser / Luft - Kühlers angeordnet sind, wie es beispielsweise in der DE 198 20 412 A1 gezeigt wurde.
In anderen Fällen ist der zweite Wärmetauscher ein wassergekühlter Kondensator für die Klimaanlage des Fahrzeuges, der im Sammelkasten eines Wasser / Luft - Kühlers angeordnet ist, wie es beispielsweise im EP 678 661 B1 geschehen ist.
In den geschilderten Anwendungsfällen besteht die Motivation für die beschriebenen Ausbildungen durchweg darin, die Kühlfähigkeit der Kühlflüssigkeit der Brennkraftmaschine möglichst auf kleinstem Raum zur Befriedigung anderer Kühlungsbedarfe als allein der Motorkühlung heranzuziehen.
Bei Ladeluftkühlern gibt es seit jeher Schwierigkeiten bezüglich der Haltbarkeit der Lötverbindungen, weil zwischen der Ladeluft und der Kühlluft oder der Kühlflüssigkeit solch hohe Temperaturdifferenzen auftreten, wie sie in anderen Wärmetauschern im Kraftfahrzeugbereich nicht vorkommen. Die zukünftigen Abgasgrenzwerte für Nutzfahrzeuge mit Dieselmotoren stellen die Hersteller der dafür erforderlichen Wärmetauscher neuerdings noch schwierigere Aufgaben. Vor allem soll die Temperatur der Ladeluft am Austritt aus dem Ladeluftkühler noch wesentlich weiter als bisher abgesenkt werden und das, obwohl die Ladeluft vor dem Ladeluftkühler wesentlich höhere Temperaturen als bisher aufweisen wird.
Um eine effektive Kühlung der Ladeluft zu bewirken, ist es aus der DE 2 923 852 bekannt, zweistufige Ladeluftkühler vorzusehen, wobei die erste Stufe ein mittels Kühlmittel der Brennkraftmaschine gekühlter Ladeluftkühler und der zweite, sich unmittelbar an die erste Stufe anschließende Ladeluftkühler, ein mittels Kühlluft gekühlter Ladeluftkühler ist. Beide Ladeluftkühler sind mechanisch verbunden. Diesen Stand der Technik möchte die vorliegende Erfindung verbessern.
Die Aufgabe der Erfindung besteht darin, luftgekühlte Ladeluftkühler, zur Kühlung von Ladeluft mit wesentlich höherer Eintrittstemperatur, zur Verfügung zu stellen, die mit einfachen, kostengünstigen Mitteln eine geringere Temperatur der Ladeluft am Ausgang des Ladeluftkühlers erreichen, ohne dass der erforderliche Bauraum für den Ladeluftkühler wesentlich größer wird.

Diese Aufgabe wird bei dem vorstehend definierten luftgekühlten Ladeluftkühler erfindungsgemäß durch die kennzeichnenden Merkmale im Anspruch 1 gelöst.
Weiterbildungen sind Gegenstand der Unteransprüche 2 bis 10.
Gemäß der Erfindung wird die Kühlflüssigkeit zur Vorkühlung der Ladeluft in einem im Eintritts-Sammelkasten des Ladeluftkühlers angeordneten Vorkühler herangezogen.
Weil die Eintrittstemperatur der Ladeluft durch den Vorkühler im Eintritts - Sammelkasten reduziert wurde, wurde damit auch die Austrittstemperatur der Ladeluft am Auslass reduziert. Außerdem ergeben sich durch die erfindungsgemäße Ausbildung mehrere willkommene Nebeneffekte. Die im Vorkühler vorhandenen Kanäle für die Ladeluft sorgen für eine Vergleichmäßigung der Strömung in die Flachrohre des luftgekühlten Kühlnetzes, wodurch Überlastungen einzelner Flachrohre vermieden werden. Ferner wurde die Temperaturdifferenz zwischen der Kühlluft und der in die Flachrohre eintretenden Ladeluft durch die Vorkühlung reduziert, so dass es dort nicht mehr zu solch starken Spannungen und dadurch verursachten Materialbrüchen kommen wird. Insgesamt wurde auf gleich großem Raum die Kühlleistung des Ladeluftkühlers gesteigert, wodurch den Forderungen der Nutzfahrzeughersteller entsprochen wurde. Dies wurde insbesondere durch die Begrenzung der Tiefe des Vorkühlers auf ca. 25 - 200 mm erreicht, denn, wie sich aus durchgeführten Versuchs - und Meßreihen ergeben hat, führt eine weitere Vergrößerung der Tiefe des Vorkühlers nicht mehr zu einer entsprechenden Verkleinerung des luftgekühlten Kühlnetzes, bedingt durch den geringeren Temperaturgradienten. Außerdem tritt ein spürbar höherer Druckverlust der Ladeluft auf. Die Versuche wurden unter den im Kraftfahrzeugbereich vorherrschenden Bedingungen und Temperaturen der Kühlluft von etwa 40 °C und der Kühlflüssigkeit von etwa 100 °C und bei einer Temperatur der in den Eintritts-Sammelkasten eintretenden Ladeluft von ca. 300 °C durchgeführt, wobei die Austrittstemperaturen der Ladeluft etwa bei 40 bis 60°C lagen.

Der erfindungsgemäße Ladeluftkühler eignet sich zum Einbau in eine kastenförmige Kühlanlage, bei der die Sammelkästen benachbarter Kühler jeweils eine Kante der Kühlanlage ausbilden, weil sich der erfindungsgemäße Ladeluftkühler hinsichtlich seiner äußeren Gestalt nur unwesentlich von herkömmlichen Kühlern in solchen Kühlanlagen unterscheidet. Wenn der in einer solchen Anlage benachbarte Kühler ein Kühlmittelkühler ist, sind sehr kurze Leitungswege zum Vorkühler vorhanden, weil das Kühlmittel direkt aus einem Sammelkasten des Kühlmittelkühlers entnommen und nach Durchströmen des Vorkühlers wieder dorthin zurückgeführt werden kann. Dazu sind Strömungsöffnungen in benachbarten Sammelkästen vorhanden, in denen sich Einsätze befinden, um einen Teil des Kühlmittels aus dem Sammelkasten des Kühlmittelkühlers in den im Eintritts - Sammelkasten des Ladeluftkühlers angeordneten Vorkühler und, nach dessen Durchströmung, wieder zurück in den Sammelkasten des Kühlmittelkühlers zu leiten. Eine solche Kühlanlage, die vorstehend erläutert wurde, ist Gegenstand der nicht vorveröffentlichten Anmeldung DE 100 45 987.0. Wegen weiterer diesbezüglich relevanter Einzelheiten wird auf den dort enthaltenen Inhalt verwiesen.
Der erfindungsgemäße Ladeluftkühler kann jedoch in gleicher vorteilhafter Weise in herkömmlichen Kühlanlagen eingebaut sein, wobei mehrere Kühler in Kühlluftströmungsrichtung hintereinander angeordnet sind.
Im Vergleich mit dem Ladeluftkühler aus der DE 32 00 688 A1 und aus der DE 2 923 852 wurde ein wesentlich kostengünstigerer Ladeluftkühler geschaffen, der zudem effizienter arbeitet als der Ladeluftkühler aus dem erstgenannten Dokument. Gegenüber dem zweistufigen Ladeluftkühler aus dem zweiten Dokument, der aus zwei mittels Bolzen verbundenen Wärmetauschern besteht, wurde eine wesentlich kompaktere Gestaltung des erfindungsgemäßen Ladeluftkühlers erreicht.
Nachfolgend wird die Erfindung in einem Ausführungsbeispiel erläutert, wozu auf die beiliegenden Figuren Bezug genommen wird.
Fig. 1 Seitenansicht auf den Ladeluftkühler;
Fig. 2 Schnitt II-II aus Fig. 3;
Fig. 3 Schnitt III-III aus Fig. 2;
Fig. 4 Temperaturverlauf in Abhängigkeit von der Tiefe des Vorkühlers;

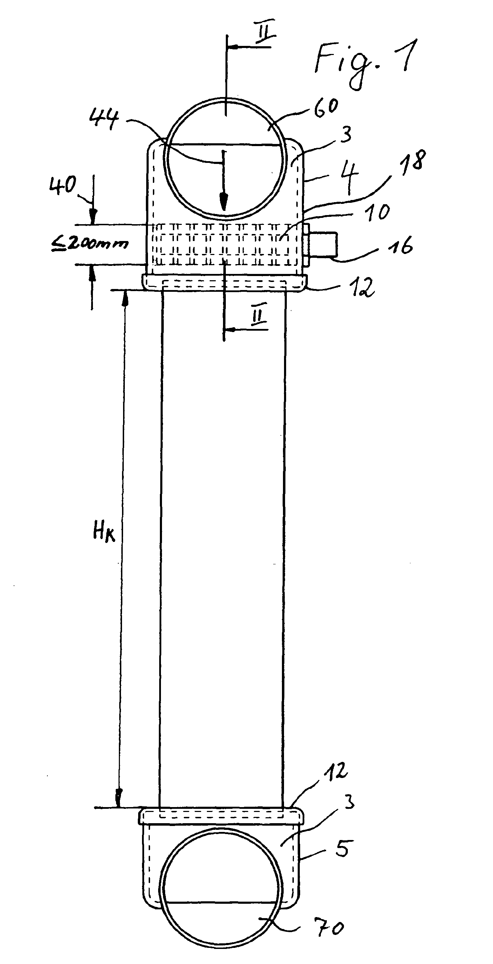

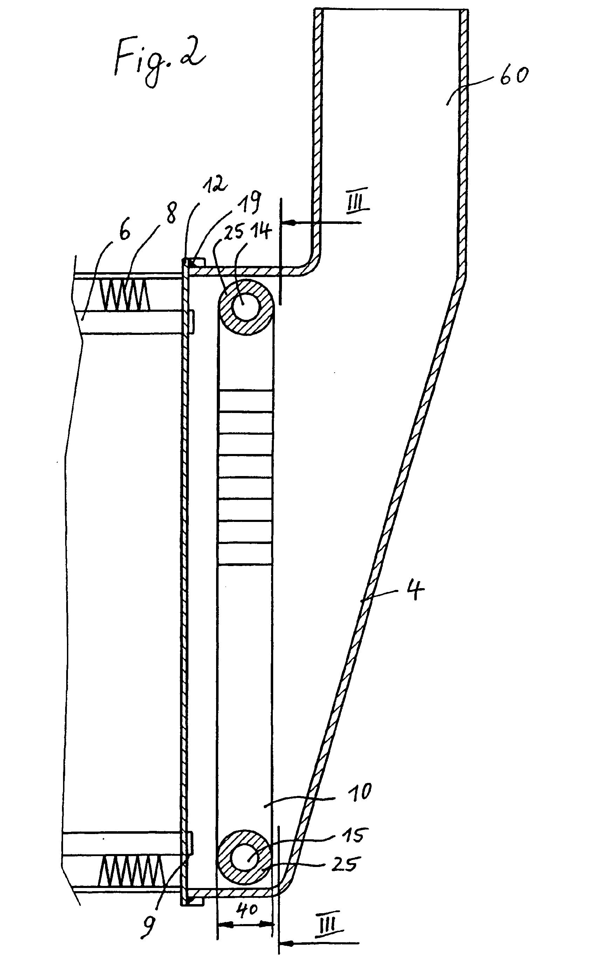

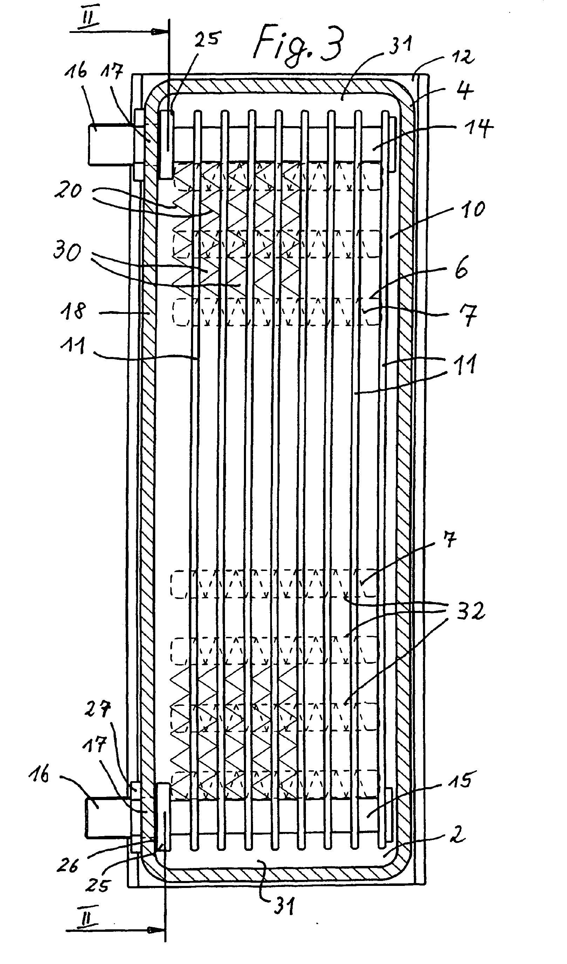

Der Ladeluftkühler **1** und der Vorkühler **10**, der in seinem Eintritts-Sammelkasten **4** angeordnet ist, bestehen komplett aus Aluminium, selbstverständlich abgesehen davon, dass - wie in dem gezeigten Ausführungsbeispiel - der Vorkühler **10** im Eintritts-Sammelkasten **4** mechanisch durch Anschraubflansche **16** befestigt ist, wozu geeignete Dichtungen **26** verwendet werden.
Der in der Fig. 1 oben liegende Eintritts-Sammelkasten **4** ist wesentlich größer als der untere Austritts-Sammelkasten **5**, um den Vorkühler **10** in sich aufnehmen zu können. Jedoch wurde das luftgekühlte Kühlnetz in seiner Abmessung **Hk** reduziert, so dass der Platzbedarf für den Ladeluftkühler **1** etwa gleich geblieben ist, verglichen mit einem Ladeluftkühler ohne Vorkühlung. Beide Sammelkästen **4** und **5** sind als Aluminiumgußerzeugnis hergestellt worden. Das luftgekühlte Kühlnetz wird aus Flachrohren **6** und Wellrippen **8** zusammengefügt, wobei die Wellrippen **8** an den flachen Seiten **32** der Flachrohre **6** anliegen. In den Flachrohren **6** befinden sich Inneneinsätze **7**. Danach werden die Enden der Flachrohre **6** in entsprechende Öffnungen **9** in den Rohrböden **12** eingefügt. Da die Teile eine zweckmäßige Lotbeschichtung besitzen, kann das so gefügte Kühlnetz in einem Lötofen gelötet werden. Im gezeigten Ausführungsbeispiel besitzt das Kühlnetz lediglich eine einzige Reihe von Flachrohren **6**. (Fig. 3) In nicht gezeigten anderen Beispielen sind mehrere Reihen nebeneinander angeordnet. In ähnlicher Weise wird der Vorkühler **10,** bestehend aus flachen Rohren **11** und Wellrippen **20** zusammengefügt. Da in diesen flachen Rohren **11** eine Kühlflüssigkeit strömt, müssen sie nicht unbedingt mit Inneneinsätzen **7** ausgestattet sein, wie diejenigen des luftgekühlten Kühlnetzes, in denen die Ladeluft strömt. Der Vorkühler **10** besitzt zwei rohrförmige Sammelräume **14**, **15**. Um auch den Raum an den stirnseitigen Enden **31** des Eintritts-Sammelkastens **4** möglichst eng mit den flachen Rohren **11** und den die Kanäle **30** ausfüllenden Wellrippen **20** zu belegen und auch die dort hindurchströmende heiße Ladeluft vorzukühlen, gehen die flachen Rohre **11** relativ dicht bis an die strinseitigen Enden **31** heran, wie die Fig. 3 zeigt, die im übrigen eine Darstellung des großen Querschnitts **2** des Eintritts-Sammelkastens **4** ist, der vom Vorkühler **10** nahezu vollständig ausgefüllt ist. Der kleine Querschnitt **3** soll senkrecht dazu verlaufen, wie in der Fig. 1 gezeigt. Die flachen Rohre **11** reichen deshalb etwas über den Abstand zwischen den zwei Sammelräumen **14**, **15** hinaus. Aus diesem Grund kann es sich bei den flachen Rohren **11** des Vorkühlers **10** um jeweils zwei Halbschalen handeln, die zu einem flachen Rohr **11** zusammengefügt werden. Die Sammelräume **14**, **15** können aus aus den Halbschalen gezogenen Näpfen gebildet sein, wobei die Näpfe der Halbschalen am Rand mit ebensolchen an der benachbarten Halbschale des nächsten flachen Rohres **11** verlötet sind. Es können jedoch auch gezogene oder geschweißte flache Rohre **11** verwendet werden, die an den Enden gelocht sind, wobei in diesem Fall die Sammelräume **14**, **15** durch mit den Löchern korrespondierende eingelegte Ringe gebildet werden können - oder auch durch geschlitzte Rohre. Die beschriebenen Bauarten gehören an sich zum Stand der Technik und sind dem Fachmann geläufig, beispielsweise für Ölkühler. Die so vormontierten Vorkühler werden ebenfalls komplett verlötet.
Danach werden in der Wand **18** des Eintritts-Sammelkastens **4** je zwei Öffnungen **17** eingebracht. Jede dieser Öffnungen **17** nimmt einen an den Sammelräumen **14**, **15** angeordneten Anschlußstutzen **16** auf. Vorliegend werden die Anschlußstutzen **16** in den Öffnungen **17** festgeschraubt, wobei zuvor eine geeignete Dichtung **26** zwischengelegt wurde, was ebenfalls aus der Fig. 3 zu erkennen ist. Die Anschlußstutzen **16** werden danach mittels Muttern **27** in den Öffnungen **17** befestigt. Bei einer nicht gezeigten anderen Ausführung sind die Anschlußstutzen **16** in den Öffnungen **17** eingeschweißt worden.
Danach werden der Eintritts-Sammelkasten **4** und der Austritts-Sammelkasten **5** mittels Schweißen mit den Rohrböden **12** verbunden. In Fig. 2 ist die entsprechende Schweißnaht **19** eingezeichnet worden.
Die etwa 300 °C heiße Ladeluft durchströmt ohne wesentliche Umlenkung, gemäß dem in Fig. 1 im Eintritts-Sammelkasten **4** eingezeichneten Pfeil **44**, zunächst die Kanäle **30** (Fig. 3) des Vorkühlers **10** und dann, nachdem sie im Vorkühler **10** vom flüssigen Kühlmittel des nicht gezeigten Verbrennungsmotors, das eine Temperatur von etwa 100°C aufweist, heruntergekühlt wurde, tritt die vorgekühlte Ladeluft in die Flachrohre **6** des luftgekühlten Kühlnetzes ein, um von Umgebungsluft bis auf etwa 60°C abgekühlt zu werden. Die Kanäle **30** des Vorkühlers **30** kreuzen die flachen Seiten **32** der Flachrohre **6**, (Fig. 3) wodurch die Ladeluft, ohne wesentlichen Druckverlust zu erfahren, in die Flachrohre **6** geleitet wird. Obwohl sich die Kanäle **30** mit den Flachrohren **6** kreuzen, liegen sie in einer gemeinsamen, durch den Pfeil **44** angezeigten, Strömungsrichtung der Ladeluft.
Von wesentlicher Bedeutung ist die gefundene Optimierungsmaßnahme, die gemäß einem wesentlichen Merkmal, darin besteht, dass die Tiefe **40** (Fig. 1 und 2) des Vorkühlers **10** etwa 25 bis 200 mm bemessen sein soll. Das Optimum liegt zwischen 40 und 120 mm. Es wurde nämlich festgestellt, dass Vorkühler **10** mit größerer Tiefe, unter den gegebenen Rahmenbedingungen (Nutzfahrzeuge) , ihre Wirkung nicht wie gewünscht entfalten können. Insbesondere führt eine weitere Vertiefung nicht zu einer äquivalenten Reduzierung der Höhe **Hk** des luftgekühlten Kühlnetzes.
Die Fig. 2 zeigt die Position des Vorkühlers **10** im Eintritts-Sammelkasten **4** in einem Längsschnitt durch denselben. Er ist etwa parallel verlaufend zum Rohrboden **12**, etwas oberhalb der Enden der Flachrohre **6**, angeordnet. Auf die Parallelität kommt es jedoch nicht besonders an, denn der Vorkühler **10** könnte auch mit Schräglage angeordnet sein. Wesentlich ist, dass der große Querschnitt **3** im Entritts-Sammelkasten **4** möglichst vollständig durch den Vorkühler **10** belegt ist, so dass möglichst die gesamte heiße Ladeluft denselben durchströmen muß. Um auch den äußeren Kanal **30**, der zwischen der Wand **18** des Sammelkastens **4** und dem ersten flachen Rohr **11** des Vorkühlers **10** angeordnet ist, effektiv am Wärmeaustausch zu beteiligen, befindet sich auch in diesem Kanal 30 eine Wellrippe **20.** (Fig. 3) Dieser äußere Kanal **30** kann aus Montagegründen etwas breiter als die anderen Kanäle **30** sein. Der Eintritts-Sammelkasten **4** besitzt einen Ladelufteintritt **60** von beträchtlicher Abmessung und eine zum Kühlnetz hin geneigte Wandung, die die Ladeluft auf den Vorkühler **10** bzw. dessen Kanäle **30** richtet. Vom luftgekühlten Kühlnetz des Ladeluftkühlers **1** wurden nur die äußeren Wellrippen **8** und Flachrohre **6** gezeichnet. Sie erstrecken sich selbstverständlich über die gesamte Länge, wobei, im Unterschied zur DE 32 00 688, auf jedes Flachrohr **6** für die Ladeluft jeweils eine Wellrippe **8** für die Kühlluft folgt.

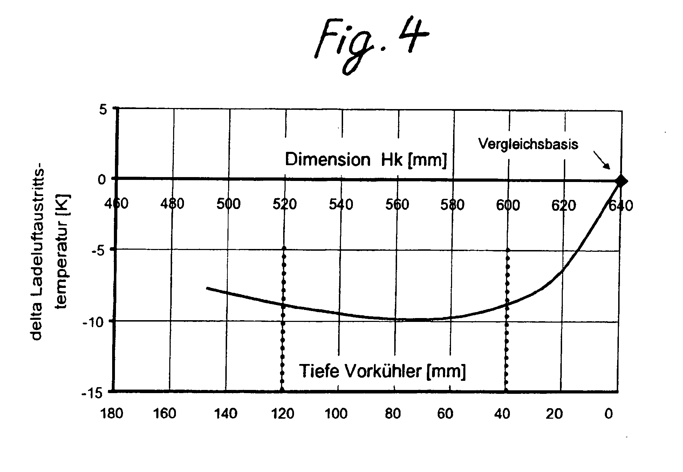

Die Fig. 4 zeigt das Ergebnis der durchgeführten Untersuchungen anhand einer Kurve, die den Zusammenhang zwischen der Austrittstemperatur der Ladeluft aus dem Ladeluftkühler **1** und der Dimension **40** des Vorkühlers **10** darstellt. Bei Tiefen **40** die 200 mm überschreiten, steigt die Temperatur der den Ladeluftkühler **1** verlassenden Ladeluft wieder deutlich an, bzw. die Temperaturdifferenz zwischen den Austrittstemperaturen eines Ladeluftkühlers mit Vorkühlung und eines Ladeluftkühlers ohne Vorkühlung wird deutlich geringer. Es wird davon ausgegangen, dass die Temperatur der verwendeten Kühlluft nicht zu beeinflussen ist. Die Effizienz des Wärmeübergangs liegt durch die Gestaltung des Kühlnetzes ebenfalls fest. Also müßte als variable Veränderliche das luftgekühlte Kühlnetz vergrößert werden, was jedoch im vorliegenden Zusammenhang nicht gewünscht ist. Als Mindesttiefe **40** wurde bei den Untersuchungen von etwa 25 mm ausgegangen. Auf der linken vertikalen Achse in Fig. 4 wurde die Differenz der Ladeluftaustrittstemperatur im Vergleich zwischen einem Ladeluftkühler ohne
Vorkühlung und einem Ladeluftkühler etwa gleicher Abmessung mit Vorkühlung aufgetragen. Auf der unteren horizontalen Achse ist die Tiefe **40** des Vorkühlers **10** aufgetragen. Die obere horizontale Achse zeigt die Dimension **Hk** des Ladeluftkühlers. Die Kurve im Ausführungsbeispiel nach Fig. 4 zeigt an, dass zwischen 60 und 80 mm die erwähnte Temperaturdifferenz am größten ist. Zwischen 40 und 120 mm liegt ein bevorzugter Bereich. Die Vergleichsbasis ist ein Ladeluftkühler ohne Vorkühlung mit einem Maß **Hk** von etwa 640 mm.

## Patentansprüche

1. Luftgekühlter Ladeluftkühler (1) für Kraftfahrzeuge, bestehend aus zwei gegenüberliegenden, einen großen und eine kleinen Querschnitt (2; 3) aufweisenden, Sammelkästen (4; 5), die mittels einer oder mehrerer Reihen von Flachrohren (6), die Inneneinsätze (7) aufweisen, verbunden sind, wobei zwischen den Flachrohren (6) Wärmeaustauschelemente (8) angeordnet sind, durch die die Kühlluft hindurchströmt und die gemeinsam mit den Flachrohren (6) das Kühlnetz bilden und wobei in mindestens einem der Sammelkästen ein zweiter Wärmeaustauscher (10) angeordnet ist, dessen Rohre von der Ladeluft umströmt und von Kühlflüssigkeit durchströmt sind,
**dadurch gekennzeichnet, dass**
im Eintritts - Sammelkasten (4) des komplett aus Aluminium bestehenden Ladeluftkühlers (1) ein Ladeluft - Vorkühler (10) derart angeordnet ist, dass er den großen Querschnitt (2) des Eintritts - Sammelkastens (4) zumindest nahezu vollständig ausfüllt, so dass zumindest nahezu der gesamte Strom der Ladeluft den Vorkühler (10) passieren muß, wobei der Vorkühler (10) komplett gelötet ist und flache Rohre (11) für die Kühlflüssigkeit sowie dazwischen angeordnete, mit Rippen (20) belegte Kanäle (30) für die Ladeluft aufweist, wobei die Tiefe (40) der mit Rippen belegten Kanäle (30) etwa zwischen 25 und 200 mm ist und dass im Kühlnetz auf jedes Flachrohr (6) für die vorgekühlte Ladeluft ein Wärmeaustauschelement (8) (Wellrippe) für die Kühlluft folgt und die Wellrippen (8) mit den flachen Seiten (32) der Flachrohre (6) verlötet sind.

2. Luftgekühlter Ladeluftkühler nach Anspruch 1, **dadurch gekennzeichnet, dass** der Ladeluftkühler (1) Rohrböden (12) besitzt, in deren Öffnungen die Enden der Flachrohre (6) münden, insbesondere dort eingelötet sind und die Sammelkästen (4; 5) mit den Rohrböden (12) verschweißt sind.

3. Lu**ftgekühlter Ladeluftkühler nach Anspruch 1 und 2, dadurch gekennzeichnet, dass** die mit Rippen (20) belegten Kanäle (30) für die Ladeluft im Vorkühler (10) über Kreuz mit den flachen Seiten (32) der Flachrohre (6) des Kühlnetzes verlaufen und die Tiefe der Kanäle (30) vorzugsweise zwischen 40 und 120 mm beträgt.

4. Luftgekühlter Ladeluftkühler nach einem der vorstehenden Ansprüche, **dadurch gekennzeichnet, dass** die parallelen Kanäle (30) für die Ladeluft im Vorkühler (10) in einer gemeinsamen Richtung (44) mit den Flachrohren (6) des Kühlnetzes angeordnet sind, so dass die Ladeluft ohne wesentliche Umlenkung den Vorkühler (10) und die Flachrohre (6) durchströmen kann und dass die flachen Rohre (11) für die Kühlflüssigkeit sich quer zu dieser Richtung bzw. in Längsrichtung des Eintritts - Sammelkastens (4) erstrecken.

5. Luftgekühlter Ladeluftkühler nach einem der vorstehenden Ansprüche, **dadurch gekennzeichnet, dass** der Vorkühler (10) zwei rohrförmige Sammelräume (14; 15) für die Kühlflüssigkeit aufweist, die mittels der parallelen, flachen Rohre (11) verbunden sind, wobei an je einem Ende der Sammelräume (14, 15) ein Anschlußstutzen (16) zur abdichtenden lösbaren Verbindung und Montage in je einer zugeordneten Öffnung (17) der Wandung (18) des Eintritts-Sammelkastens (4) vorgesehen ist.

6. Luftgekühler Ladeluftkühler nach einem der Ansprüche 1 bis 4, **dadurch gekennzeichnet, daß** der Vorkühler (10) zwei rohrförmige Sammelräume (14; 15) für die Kühlflüssigkeit aufweist, die mittels der parallelen, flachen Rohre (11) verbunden sind, wobei an je einem Ende der Sammelräume (14, 15) ein Anschlußstutzen (16) angeordnet ist, der in einer zugeordneten Öffnung (17) der Wandung (18) des Eintritts-Sammelkastens (4) eingeschweißt ist.

7. Luftgekühlter Ladeluftkühler nach einem der vorstehenden Ansprüche, **dadurch gekennzeichnet, dass** der Vorkühler (10) vorzugsweise etwa parallel zum Rohrboden (12) angeordnet ist und aus Edelstahl oder Aluminium besteht.

8. Luftgekühlter Ladeluftkühler nach einem der vorstehenden Ansprüche, **dadurch gekennzeichnet, dass** der Eintritts-Sammmelkasten (4) wesentlich größer ist als der Austritts-Sammelkasten (5).

9. Luftgekühlter Ladeluftkühler nach einem der vorstehenden Ansprüche, **dadurch gekennzeichnet, dass** der Ladeluftkühler Bestandteil einer kastenförmigen Kühlanlage ist, wobei er darin so angeordnet ist, dass seine Sammelkästen (4, 5) mit den Sammelkästen benachbarter Kühler jeweils eine Kante der Kühlanlage ausbilden.

10. Luftgekühlter Ladeluftkühler nach Anspruch 1 und 9, **dadurch gekennzeichnet, dass** zwischen dem Eintritts - Sammelkasten (4) des Ladeluftkühlers (1) und dem benachbarten Sammelkasten des Kühlmittelkühlers Strömungsöffnungen mit Einsätzen vorhanden sind, um einen Teil der Kühlflüssigkeit aus dem Sammelkasten des Kühlflüssigkeitskühlers durch den Vorkühler (10) im Eintritts-Sammelkasten (4) des Ladeluftkühlers (1) zu leiten.

## Claims

1. Air-cooled charge-air cooler (1) for motor vehicles, composed of two opposite collecting tanks (4; 5) which have a large and a small cross section (2; 3) and which are connected by means of one or more rows of flat tubes (6) which have inner inserts (7), with heat-exchanging elements (8) being arranged between the flat tubes (6), through which heat-exchanging elements (8) the cooling air flows and which, together with the flat tubes (6), form the cooling network, and with a second heat exchanger (10) being arranged in at least one of the collecting tanks, around the tubes of which second heat exchanger (10) the charge air flows and through the tubes of which second heat exchanger (10) cooling liquid flows,
**characterized in that**
a charge-air pre-cooler (10) is arranged in the inlet collecting tank (4) of the fully-aluminium charge-air cooler (1) in such a way as to at least approximately completely fill up the large cross section (2) of the inlet collecting tank (4), so that at least approximately the entire flow of charge air must pass the pre-cooler (10), with the pre-cooler (10) being fully soldered and having flat tubes (11) for the cooling liquid and, arranged between these, ducts (30), which are fitted with fins (20), for the charge air, with the depth (40) of the ducts (30) which are fitted with fins (20) being approximately between 25 and 200 mm, and **in that**, in the cooling network, each flat tube (6) for the pre-cooled charge air is followed by a heat-exchanging element (8) (corrugated fin) for the cooling air, and the corrugated fins (8) are soldered to the flat sides (32) of the flat tubes (6).

2. Air-cooled charge-air cooler according to Claim 1, **characterized in that** the charge-air cooler (1) has tube plates (12), in the openings of which the ends of the flat tubes (6) open out and are in particular soldered there, and the collecting tanks (4; 5) are welded to the tube plates (12).

3. Air-cooled charge-air cooler according to Claim 1 and 2, **characterized in that** the ducts (30) which are fitted with fins (20) for the charge air in the pre-cooler (10) run transversely with respect to the flat sides (32) of the flat tubes (6) of the cooling network, and the depth of the ducts (30) is preferably between 40 and 120 mm.

4. Air-cooled charge-air cooler according to one of the preceding claims, **characterized in that** the parallel ducts (30) for the charge air in the pre-cooler (10) are arranged in a common direction (44) with the flat tubes (6) of the cooling network, so that the charge air can flow through the pre-cooler (10) and the flat tubes (6) without a significant deflection, and **in that** the flat tubes (11) for the cooling liquid extend transversely to said direction or in the longitudinal direction of the inlet collecting tank (4) .

5. Air-cooled charge-air cooler according to one of the preceding claims, **characterized in that** the pre-cooler (10) has two tubular collecting spaces (14; 15) for the cooling liquid, which collecting spaces (14; 15) are connected by means of the parallel, flat tubes (11), with a connecting pipe (16) for sealing, detachable connection and assembly being provided at in each case one end of the collecting spaces (14, 15) in each case in an associated opening (17) of the wall (18) of the inlet collecting tank (4).

6. Air-cooled charge-air cooler according to one of Claims 1 to 4, **characterized in that** the pre-cooler (10) has two tubular collecting spaces (14; 15) for the cooling liquid, which collecting spaces (14; 15) are connected by means of the parallel, flat tubes (11), with a connecting pipe (16) being arranged at in each case one end of the collecting spaces (14, 15), which connecting pipe (16) is welded into an associated opening (17) of the wall (18) of the inlet collecting tank (4).

7. Air-cooled charge-air cooler according to one of the preceding claims, **characterized in that** the pre-cooler (10) is preferably arranged approximately parallel to the tube plate (12) and is composed of high-grade steel or aluminium.

8. Air-cooled charge-air cooler according to one of the preceding claims, **characterized in that** the inlet collecting tank (4) is significantly larger than the outlet collecting tank (5).

9. Air-cooled charge-air cooler according to one of the preceding claims, **characterized in that** the charge-air cooler is a constituent part of a box-shaped cooling system, with said charge-air cooler being arranged in said cooling system such that its collecting tanks (4, 5), together with the collecting tanks of adjacent coolers, form in each case one edge of the cooling system.

10. Air-cooled charge-air cooler according to Claim 1 and 9, **characterized in that** flow openings with inserts are provided between the inlet collecting tank (4) of the charge-air cooler (1) and the adjacent collecting tank of the coolant cooler in order to conduct a part of the cooling liquid from the collecting tank of the cooling liquid cooler through the pre-cooler (10) into the inlet collecting tank (4) of the charge-air cooler (1) .

## Revendications

1. Refroidisseur d'air de charge (1) aéroréfrigéré, pour véhicules automobiles, constitué de deux caisses collectrices (4 ; 5) opposées présentant une grande et une petite section transversale (2 ; 3), qui sont connectées au moyen d'une ou de plusieurs rangées de tubes plats (6) qui présentent des inserts intérieurs (7), entre les tubes plats (6) étant disposés des éléments d'échange thermique (8) à travers lesquels circule l'air de refroidissement et qui forment conjointement avec les tubes plats (6) le réseau de refroidissement, dans au moins l'une des caisses collectrices étant disposé un deuxième échangeur de chaleur (10) dont les tubes sont entourés par la circulation de l'air de charge et qui sont traversés par le liquide de refroidissement,
**caractérisé en ce que**
dans la caisse collectrice d'entrée (4) du refroidisseur d'air de charge (1) constitué entièrement d'aluminium, est disposé un prérefroidisseur d'air de charge (10) de telle sorte qu'il remplisse au moins pratiquement complètement la grande section transversale (2) de la caisse collectrice d'entrée (4), de sorte qu'au moins pratiquement tout le flux de l'air de charge doive traverser le prérefroidisseur (10), le prérefroidisseur (10) étant complètement brasé et présentant des tubes plats (11) pour le liquide de refroidissement ainsi que des canaux (30) disposés entre eux et garnis d'ailettes (20) pour l'air de charge, la profondeur (40) des canaux (30) garnis d'ailettes étant comprise entre environ 25 et 200 mm et **en ce que** dans le réseau de refroidissement, chaque tube plat (6) pour l'air de charge prérefroidi est suivi d'un élément d'échange thermique (8) (ailette ondulée) pour l'air de refroidissement, et les ailettes ondulées (8) sont brasées aux côtés plats (32) des tubes plats (6).

2. Refroidisseur d'air de charge aéroréfrigéré selon la revendication 1, **caractérisé en ce que** le refroidisseur d'air de charge (1) possède des plaques à tubes (12) dans les ouvertures desquelles débouchent les extrémités des tubes plats (6), notamment y sont brasées, et les caisses collectrices (4 ; 5) sont soudées avec les plaques à tubes (12).

3. Refroidisseur d'air de charge aéroréfrigéré selon la revendication 1 et la revendication 2, **caractérisé en ce que** les canaux (30) garnis d'ailettes (20) pour l'air de charge dans le prérefroidisseur (10) s'étendent en coupant les côtés plats (32) des tubes plats (6) du réseau de refroidissement et la profondeur des canaux (30) est de préférence comprise entre 40 et 120 mm.

4. Refroidisseur d'air de charge aéroréfrigéré selon l'une quelconque des revendications précédentes, **caractérisé en ce que** les canaux parallèles (30) pour l'air de charge dans le prérefroidisseur (10) sont disposés dans une même direction (44) que les tubes plats (6) du réseau de refroidissement de sorte que l'air de charge puisse s'écouler sans déviation notoire à travers le prérefroidisseur (10) et les tubes plats (6) et **en ce que** les tubes plats (11) pour le liquide de refroidissement s'étendent transversalement à cette direction ou dans la direction longitudinale de la caisse collectrice d'entrée (4).

5. Refroidisseur d'air de charge aéroréfrigéré selon l'une quelconque des revendications précédentes, **caractérisé en ce que** le prérefroidisseur (10) présente deux espaces collecteurs tubulaires (14 ; 15) pour le liquide de refroidissement, qui sont connectés au moyen des tubes plats parallèles (11), une tubulure de raccordement (16) étant prévue à chaque extrémité des espaces collecteurs (14, 15) pour être reliée et montée de manière hermétique et détachable dans chaque ouverture associée (17) de la paroi (18) de la caisse collectrice d'entrée (4) .

6. Refroidisseur d'air de charge aéroréfrigéré selon l'une quelconque des revendications 1 à 4, **caractérisé en ce que** le prérefroidisseur (10) présente deux espaces collecteurs tubulaires (14 ; 15) pour le liquide de refroidissement, qui sont connectés au moyen des tubes plats parallèles (11), une tubulure de raccordement (16) étant prévue à chaque extrémité des espaces collecteurs (14, 15), laquelle est soudée dans une ouverture associée (17) de la paroi (18) de la caisse collectrice d'entrée (4).

7. Refroidisseur d'air de charge aéroréfrigéré selon l'une quelconque des revendications précédentes, **caractérisé en ce que** le prérefroidisseur (10) est disposé de préférence approximativement parallèlement à la plaque à tubes (12) et se compose d'acier spécial ou d'aluminium.

8. Refroidisseur d'air de charge aéroréfrigéré selon l'une quelconque des revendications précédentes, **caractérisé en ce que** la caisse collectrice d'entrée (4) est nettement plus grande que la caisse collectrice de sortie (5).

9. Refroidisseur d'air de charge aéroréfrigéré selon l'une quelconque des revendications précédentes, **caractérisé en ce que** le refroidisseur d'air de charge fait partie d'une installation de refroidissement en forme de caisse, et est disposé dans celle-ci de telle sorte que ses caisses collectrices (4, 5) constituent avec les caisses collectrices de refroidisseurs adjacents à chaque fois un bord de l'installation de refroidissement.

10. Refroidisseur d'air de charge aéroréfrigéré selon la revendication 1 et la revendication 9, **caractérisé en ce qu'**entre la caisse collectrice d'entrée (4) du refroidisseur d'air de charge (1) et la caisse collectrice adjacente du refroidisseur d'air de charge, sont prévues des ouvertures d'écoulement avec des inserts, afin de guider une partie du liquide de refroidissement hors de la caisse collectrice du refroidisseur à liquide de refroidissement à travers le prérefroidisseur (10) dans la caisse collectrice d'entrée (4) du refroidisseur d'air de charge (1).
